# EUROPEAN PATENT SPECIFICATION

(11) **EP 0 842 803 B1**
(45) Date of publication and mention of the grant of the patent: **01.08.2001**
(21) Application number: 97203483.9
(22) Date of filing: 10.11.1997
(51) Int. Cl.: B60J 7/12

(54) **Hydraulic actuating device for a cover of a vehicle**
Hydraulische Betätigungseinrichtung für ein Verdeck eines Kraftfahrzeuges
Dispositif de commande hydraulique pour une capote de véhicule.

(30) Priority: 14.11.1996 NL 1004534
(43) Date of publication of application: 20.05.1998
(73) Proprietor: APPLIED POWER INC., Butler Wisconsin 53007 (US)
(72) Inventor: Mentink, Laurentius Andreas Gerardus, 7483 AC Haaksbergen (NL)
(74) Representative: Brookhuis, Hendrik Jan Arnold

(56) References cited:
- DE-A- 3 826 789
- DE-A- 4 418 776
- DE-A- 19 602 512
- GB-A- 2 266 930
- US-A- 2 586 682
- US-A- 5 279 119

## Description

The present invention relates to an hydraulic actuating device for a cover of a vehicle, comprising a double-acting hydraulic actuator which acts upon the cover, which actuator has a first working chamber, the cover being opened hydraulically when hydraulic fluid is supplied thereto, and a second working chamber, the cover being closed hydraulically when hydraulic fluid is supplied thereto, a pump which is connected via hydraulic lines to the two working chambers of the double-acting actuator, a reservoir for hydraulic fluid, and also valve means in the hydraulic lines.

Such an actuating device is known from, for example, DE 196 02 512. In the case of this known device a non-return valve which is operated by an hydraulic control pressure is accommodated in each of the supply lines to the working chambers of the actuator, which non-return valves close in the direction of the pump. If the pump is stopped or malfunctions during opening or closing of the cover, the two non-return valves ensure that the cover is held securely in its present position. For the event of the pump having a fault, a hand-operated emergency valve is accommodated in the actuating device, by means of which emergency valve the two working chambers can be connected to the reservoir, so that the cover can be taken into the open or closed position by hand. The emergency valve is usually accommodated in the boot of the vehicle, on the one hand, in order to conceal the emergency valve from view and, on the other hand, in order to safeguard the emergency valve from unauthorized operation. This arrangement has the major disadvantage that the emergency valve is often difficult to reach in the boot. In the case of some covers it is even impossible to accommodate the emergency valve in the boot, because the boot is automatically locked in its closed position during opening and closing of the cover, in order to prevent the moving cover from coming into contact with an open boot. If a pump fault then developed during operation of the cover, the emergency valve would be inaccessible. In the case of such covers the emergency valve would therefore have to be accommodated in a place in the vehicle other than the boot, which is undesirable.

Another known possibility for ensuring that the cover can be moved by hand if the pump develops a fault is to design the valve means in such a way that when the pump is shut down or has gone out of action, the two working chambers of the actuator are connected to each other or to the reservoir. This is known, for example from the US patent 2 696 403. The great disadvantage of this solution is that if the pump breaks down during movement of the cover, the cover is not held securely in position. This can lead to the cover falling back at great speed into its open position, which can be dangerous for the occupants of the vehicle.

The object of the present invention is to provide an actuating device for a cover of a vehicle which ensures that the cover can automatically be operated by hand in the event of a fault in the pump or a similar occurrence, without an unsafe movement of the cover being possible in the process.

This object is achieved by providing an hydraulic actuating device according to the preamble of claim 1, which is characterized in that the valve means are designed such that in the event of the pump not supplying any hydraulic fluid to the actuator, hydraulic fluid is automatically prevented from flowing away out of the second working chamber of the actuator, and hydraulic fluid is able to flow out of the first working chamber. Owing to the fact that fluid is prevented from flowing away out of the second working chamber automatically, i.e. without the intervention of the occupants of the vehicle, the cover cannot move to the open position and is therefore "held hydraulically" in that direction. The cover can in fact be moved immediately by hand to the closed position, so that it is then always possible to travel on with the cover closed and have the actuating device repaired later.

The valve means for achieving the inventive idea can be designed in many different ways. For example, hydraulically operating valve means can be provided, or electrically operated valve means which are suitably controlled by an appropriate electrical control system. In particular, it is preferable to use a valve of the type described in subclaims 5 and 6, which valve is known per se from WO 96/12108. The valve means can comprise a single valve, but can also comprise an assembly of several valves.

The invention will be explained in greater detail below with reference to an exemplary embodiment of the hydraulic actuating device according to the invention shown in the drawing. In the drawing:
Fig. 1 shows a diagram of the hydraulic actuating device according to the invention, and
Fig. 2 shows a side view (left half in section) of a valve which is operable by flow from the diagram of Fig. 1.

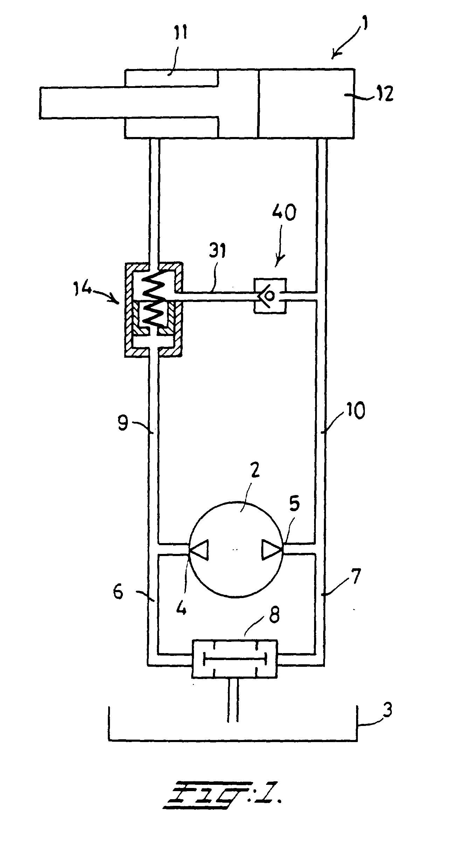

Fig. 1 shows an hydraulic actuating device for opening and closing a cover of a convertible-type motor car. The actuating device comprises a double-acting cylinder 1, which is intended to be fitted between the vehicle body and the main bow of the cover (not shown). The actuating device also comprises an electrically driven pump 2 with reversible pumping direction and a reservoir 3 for hydraulic oil.

As is usual for this type of pump, the pump 2 has two ports 4 and 5, which serve as the suction port or delivery port, depending on the direction of pumping. Each of the ports 4 and 5 is in communication with the reservoir 3 by a corresponding reservoir line 6 and 7 respectively. The reservoir lines 6, 7 are connected to a common suction shuttle valve 8 (indicated diagrammatically), which in turn is connected to the reservoir 3. Each of the ports 4 and 5 is also in communication, by a supply line 9 and 10 respectively, with the double-acting cylinder 1 and with the first working chamber 11 and the second working chamber 12 respectively.

When hydraulic fluid is supplied to the first working chamber 11, the cylinder 1 causes the cover to open, and when hydraulic fluid is supplied to the second working chamber 12, the cylinder 1 causes the cover to close.

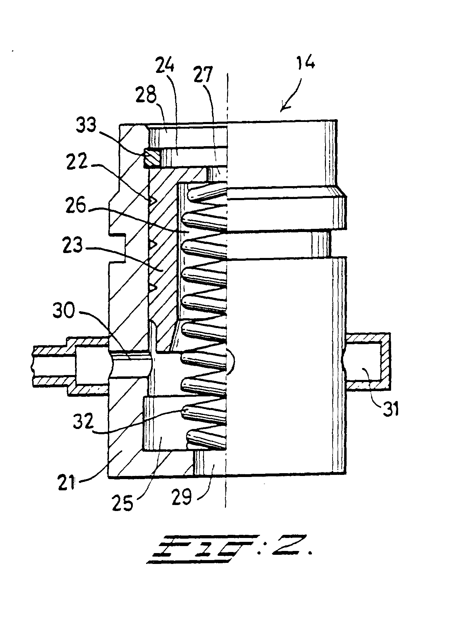

An emergency valve 14, operable by fluid flow, is accommodated in the supply line 9. An exemplary embodiment of the emergency valve 14 is shown in detail in Fig. 2.

As can be seen in Fig. 2, valve 14 comprises a body 21 in which a cylindrical bore 22 is formed. A piston 23 is situated in a sliding fit in the bore 22. The bore 22 is divided by the piston 23 into two spaces 24 and 25. Said two spaces 24 and 25 are interconnected by a passage 26 formed in the piston 23. At the side of the space 24 the passage 26 has a part 27 with a smaller bore than the part connecting thereto, with the result that the part 27 acts as a flow orifice.

The valve 14 also comprises a supply channel 28 which is formed in the body 21 and connects the space 24 to the port 4 of the pump 2, and which by way of the passage 26 in any position of the piston 23 is in communication with a first discharge channel 29 which is formed in the body 21 and connects the other space 25 of the bore 22 to the working chamber 11 of the double-acting cylinder 1. Four radial bores 30, to which an emergency channel 31 connects, are fitted in the body 21 at points uniformly distributed around the periphery of the body 21. Said emergency channel 31 in this example is in communication with the connection line 10 to the second working chamber 12 of the cylinder 1. A non-return valve 40 which closes in the direction of the emergency valve 14 is accommodated in the emergency channel 31. In a variant which is not shown, the emergency channel 31 is in communication with the reservoir. A compression spring 32, which serves as a biassing spring for the piston 23 and has the tendency to press the piston 23 against ring 33, is also present.

The non-return valve 40 prevents hydraulic fluid from flowing away from the second working chamber 12 to the first working chamber 11.

The mode of operation of the hydraulic actuating device is explained with reference to the following example.

In order to produce opening or closing of the cover, the pump 2 is put into operation in such a way that hydraulic fluid is pumped into the desired working chamber of the cylinder 1. In order to open the cover hydraulically, hydraulic fluid is forced out of the port 4 to the supply channel 28 of the valve 14. This produces a fluid flow through the passage 26, and the force produced through the flow orifice 27 will displace the piston 23 against the biassing force of the spring 32 from the position shown in Fig. 2 in the direction of the first discharge channel 29, and thereby shut off the emergency channel 31.

If the pump 2 is stopped, or in particular if the pump goes out of action when there is a (power) failure, the biassing spring 32 will reset the piston 23 to its position shown in Fig. 2, and the piston 23 will consequently clear the bores 30 of the emergency channel 31. The result of this then is that the first working chamber 11 is in communication by way of the emergency valve 14 and the emergency channel 31 with the second working chamber 12.

The cover can thus be moved to the closed position by hand when the pump 2 has been shut down or has gone out of action, without a cock or anything else needing to be operated for the purpose. The closed position can be reached because hydraulic fluid can flow away out of the first working chamber 11 of the actuator 1.

However, it is not possible to open the cover when the pump 2 has been shut down or has gone out of action, because the non-return valve 40, the suction shuttle valve 8 and the pump 2 prevent hydraulic fluid from flowing away out of the second working chamber 12. The cover is consequently retained hydraulically in the direction of closing.

In order to prevent damage to the actuating device, provision can be made for fitting pressure relief valves, which at a pressure above the maximum operating pressure of the actuating device cause the hydraulic fluid to flow to the reservoir 3.

In order to ensure that the fluid flow from the supply channel 28 to the first discharge channel 29 is not unnecessarily hampered, it is advantageous when dimensioning the valve to try to make part 27 of the passage 26 large. Although this produces a small orifice effect, if the spring 32 is also made weak, i.e. easily compressible, the piston 23 will still be displaced quickly to the position in which the bores 30 are covered by the piston 23 and the emergency channel 31 is closed.

## Claims

1. Hydraulic actuating device for a cover of a vehicle which is movable between a closed position and an open position, comprising a double-acting hydraulic actuator (1) which acts upon the cover, which actuator has a first working chamber (11), the cover being opened hydraulically when hydraulic fluid is supplied thereto, and a second working chamber (12), the cover being closed hydraulically when hydraulic fluid is supplied thereto, a pump (2) which is connected by hydraulic lines (9, 10) to the two working chambers (11, 12) of the double-acting actuator, a reservoir (3) for hydraulic fluid, and also valve means (8, 14, 40) in the hydraulic lines, characterized in that the valve means (8, 14, 40) are adapted to automatically prevent hydraulic fluid from flowing away out of the second working chamber (12) of the actuator (1), and allow hydraulic fluid to flow out of the first working chamber (11) in the event of the pump (2) not supplying any hydraulic fluid to the actuator - in particular because of a fault in the pump -, so that the cover is blocked against movement to the open position and can be taken into the closed position by hand.

2. Actuating device according to claim 1, in which the valve means (8, 14, 40) allow hydraulic fluid to flow out of the first working chamber (11) into the second working chamber (12) if the pump (2) is not supplying hydraulic fluid to the actuator (1).

3. Actuating device according to claim 1, in which the valve means allow hydraulic fluid to flow out of the first working chamber into the reservoir if the pump is not supplying hydraulic fluid to the actuator.

4. Actuating device according to one or more of the preceding claims, in which the pump (2) is a pump with reversible pumping direction and with two ports (4, 5) which serve as the suction port or delivery port, depending on the direction of pumping, each of the ports (4, 5), on the one hand, being in communication with the reservoir (3) by way of a reservoir line (6, 7), which reservoir lines are connected by way of a common suction shuttle valve (8) to the reservoir (3) and, on the other hand being in communication by way of a supply line (9,10) with one of the working chambers (11, 12) of the double-acting actuator (1), an emergency valve (14) being accommodated in the supply line (9) in communication with the first working chamber (11), which emergency valve is also in communication with an emergency channel (31) which is in communication with the second working chamber (12) or with the reservoir, the emergency valve (14) connecting the first working chamber (11) to the emergency channel (31) if the pump (2) is not supplying hydraulic fluid to the actuator (1).

5. Actuating device according to claim 4, in which the emergency valve (14) is a valve which is operable by fluid flow, and which in the presence of a fluid flow from the pump (2) to the first working chamber (11) shuts off the emergency channel (31), and otherwise produces an open communication between the first working chamber (11) and the emergency channel (31).

6. Actuating device according to claim 5, in which the emergency valve (14) comprises a body (21), a bore (22) formed in the body, a piston (23) fitting and being displaceable in the bore, which piston (23) divides the bore into two spaces (24, 25), a passage (27) formed in the piston and designed as a flow orifice connecting the two spaces (24, 25), a supply channel (28) which is formed in the body (21) and connects the port (4) of the pump to one of the spaces (24) of the bore (22) and by way of the passage (27) in any position of the piston (23) is in communication with a first discharge channel (29) which is formed in the body and connects the other space (25) of the bore (22) to the first working chamber (11) of the double-acting actuator (1), a second discharge channel (30) which is formed in the body (21) and connects to one of the two spaces of the bore and can be closed by the piston relative to the bore, and a reset spring (32) placed between the body (21) and the piston (23), in such a way that in the presence of fluid flow through the passage (27) from the side of the pump (2) to the side of the first working chamber (11) the force produced through the flow orifice (27) displaces the piston (23) against the resetting force of the reset spring (32) and the piston thereby shuts off the emergency channel (31), and in the absence of fluid flow from the pump (2) to the first working chamber (11) the reset spring (32) resets the piston (23), and the piston (23) thereby opens the emergency channel (31).

## Patentansprüche

1. Hydraulische Betätigungseinrichtung für ein Verdeck eines Kraftfahrzeuges, das zwischen einer geschlossenen Stellung und einer offenen Stellung beweglich ist, umfassend ein auf das Verdeck einwirkendes doppeltwirkendes hydraulisches Betätigungselement (1), das eine erste Arbeitskammer (11) aufweist, wobei das Verdeck hydraulisch geöffnet wird, wenn Hydraulikflüssigkeit in diese eingeleitet wird, sowie eine zweite Arbeitskammer (12), wobei das Verdeck hydraulisch geschlossen wird, wenn Hydraulikflüssigkeit in diese eingeleitet wird, eine Pumpe (2), die durch hydraulische Leitungen (9, 10) mit den beiden Arbeitskammern (11, 12) des doppeltwirkenden Betätigungselementes verbunden ist, ein Reservoir (3) für Hydraulikflüssigkeit, und des weiteren Ventilvorrichtungen (8, 14, 40) in den hydraulischen Leitungen, dadurch gekennzeichnet, daß die Ventilvorrichtungen (8, 14, 40) so ausgebildet sind, daß sie das Ausfließen der Hydraulikflüssigkeit aus der zweiten Arbeitskammer (12) des Betätigungselementes (1) automatisch verhindern und das Ausfließen der Hydraulikflüssigkeit aus der ersten Kammer (11) ermöglichen falls die Pumpe (2) dem Betätigungselement keine Hydraulikflüssigkeit zuführt - insbesondere aufgrund einer Störung in der Pumpe -, so daß das Verdeck gegen eine Bewegung in die offene Stellung gesperrt wird und von Hand in die geschlossene Stellung gebracht werden kann.

2. Hydraulikeinrichtung nach Anspruch 1, in der die Ventilvorrichtungen (8, 14, 40) das Fließen der Hydraulikflüssigkeit aus der ersten Arbeitskammer (11) in die zweite Arbeitskammer (12) ermöglicht, wenn die Pumpe (2) dem Betätigungselement keine Hydraulikflüssigkeit zuführt.

3. Betätigungseinrichtung nach Anspruch 1, in der die Ventilvorrichtungen das Fließen der Hydraulikflüssigkeit aus der ersten Arbeitskammer in das Reservoir ermöglicht, wenn die Pumpe dem Betätigungselement keine Hydraulikflüssigkeit zuführt.

4. Betätigungseinrichtung nach einem oder mehreren der vorangehenden Ansprüche, in der die Pumpe (2) eine reversible Pumprichtung aufweist und mit zwei Öffnungen (4, 5) versehen ist, die in Abhängigkeit von der Pumprichtung als Ansaugöffnung oder Ausflußöffnung dienen, wobei jede der Öffnungen (4, 5) einerseits mit dem Reservoir (3) über eine Reservoirleitung (6, 7) in Verbindung steht - wobei die Reservoirleitungen (6, 7) über ein gemeinsames Saug-Wechselventil (8) mit dem Reservoir (3) verbunden sind - und andererseits über eine Zufuhrleitung (9, 10) mit einer der Arbeitskammern (11, 12) des doppelt-wirkenden Betätigungselementes (1) in Verbindung steht, wobei ein Sicherheitsventil (14) in der Zufuhrleitung (9) in Verbindung mit der ersten Arbeitskammer (11) angeordnet ist und außerdem mit einem Sicherheitskanal (31) in Verbindung steht, welcher mit der zweiten Arbeitskammer (12) oder mit dem Reservoir verbunden ist, wobei das Sicherheitsventil (14) die erste Arbeitskammer (11) mit dem Sicherheitskanal (31) verbindet, wenn die Pumpe (2) dem Betätigungselement (1) keine Hydraulikflüssigkeit zuführt.

5. Betätigungseinrichtung nach Anspruch 4, in der es sich bei dem Sicherheitsventil (14) um ein flüssigkeitsstrombetriebenes Ventil handelt, das bei Vorhandensein eines Flüssigkeitsstroms von der Pumpe (2) zur ersten Arbeitskammer (11) den Sicherheitskanal (31) schließt und anderenfalls eine offene Verbindung zwischen der ersten Arbeitskammer (11) und dem Sicherheitskanal (31) herstellt.

6. Betätigungseinrichtung nach Anspruch 5, in der das Sicherheitsventil (14) umfaßt: einen Körper (21), eine in dem Körper ausgebildete Bohrung (22), einen in der Bohrung sitzenden und in dieser verschiebbaren Kolben (23), der die Bohrung in zwei Räume (24, 25) teilt, einen Durchlaß (27), der im Kolben ausgeformt und als Strömungsöffnung ausgebildet ist und der die beiden Räume (24, 25) verbindet, einen Zufuhrkanal (28), der im Körper (21) ausgeformt ist und die Öffnung (4) der Pumpe mit einem der Räume (24) der Bohrung (22) verbindet und der über den Durchlaß (27) bei jeder Position des Kolbens (23) mit einem ersten Abflußkanal (29) in Verbindung steht, welcher in dem Körper ausgebildet ist und den anderen Raum (25) der Bohrung (22) mit der ersten Arbeitskammer (11) des doppeltwirkenden Betätigungselementes (1) verbindet, einen zweiten Abflußkanal (30), der im Körper (21) ausgebildet und mit einem der beiden Räume der Bohrung verbunden ist und durch den Kolben relativ zur Bohrung geschlossen werden kann, und eine Rückstellfeder (32), die so zwischen dem Körper (21) und dem Kolben (23) angeordnet ist, daß bei Vorhandensein eines Flüssigkeitsstromes durch den Durchlaß (27) von der Seite der Pumpe (2) zu der Seite der ersten Arbeitskammer (11) die durch die Strömungsöffnung (27) erzeugte Kraft den Kolben (23) gegen die Rückstellkraft der Rückstellfeder (32) verschiebt und der Kolben hierdurch den Sicherheitskanal (31) schließt, und daß die Rückstellfeder (32), bei Nichtvorhandensein eines Strömungsflusses von der Pumpe (2) zur ersten Arbeitskammer (11) den Kolben (23) zurücksetzt und der Kolben (23) hierdurch den Sicherheitskanal (31) öffnet.

## Revendications

1. Dispositif d'activation hydraulique pour une capote d'un véhicule qui peut être déplacée entre une position fermée et une position ouverte, comprenant un actionneur hydraulique à double action (1) qui agit sur la capote, lequel actionneur présente une première chambre de service (11), la capote étant ouverte de manière hydraulique lorsque du fluide hydraulique est délivré à cette dernière, et une seconde chambre de service (12), la capote étant fermée de manière hydraulique lorsque du fluide hydraulique est délivré à cette dernière, une pompe (2) qui est raccordée par des conduits hydrauliques (9, 10) aux deux chambres de service (11, 12) de l'actionneur à double action, un réservoir (3) pour fluide hydraulique, ainsi que des moyens de commutation hydraulique (8, 14, 40) sur des conduits hydrauliques, caractérisé en ce que les moyens de commutation hydraulique (8, 14, 40) sont conçus pour empêcher de manière automatique que le fluide hydraulique s'échappe de la seconde chambre de service (12) de l'actionneur (1), et pour permettre au fluide hydraulique de s'écouler hors de la première chambre de service (11) dans le cas ou la pompe (2) ne délivre aucun fluide hydraulique à l'actionneur-en particulier du fait d'une panne de la pompe-, de telle sorte que le déplacement de la capote est bloqué vers la position d'ouverture et qu'elle peut être placée manuellement en position fermée.

2. Dispositif d'activation selon la revendication 1, dans lequel les moyens de commutation hydraulique (8, 14, 40) permettent au fluide hydraulique de s'échapper de la première chambre de service (11) vers la seconde chambre de service (12) si la pompe (2) ne délivre pas de fluide hydraulique à l'actionneur (1).

3. Dispositif d'activation selon la revendication 1, dans lequel les moyens de commutation hydraulique permettent au fluide hydraulique de s'échapper de la première chambre de service vers le réservoir si la pompe ne délivre pas de fluide hydraulique à l'actionneur.

4. Dispositif d'activation selon une ou plusieurs des revendications précédentes, dans lequel la pompe (2) est une pompe avec un sens de pompage réversible et avec deux orifices (4, 5) qui servent d'orifice d'aspiration ou d'orifice de refoulement, en fonction du sens de pompage, chacun des orifices (4, 5), étant, d'une part, en communication avec le réservoir (3) au moyen d'un conduit de réservoir (6, 7), lesquels conduits de réservoir sont raccordés au moyen d'une vanne à deux voies (8) d'aspiration commune au réservoir (3) et étant, d'autre part, en communication au moyen d'un conduit d'alimentation (9,10) avec une des chambres de service (11, 12) de l'actionneur à double action (1), une vanne de secours (14) étant placée sur le conduit d'alimentation (9) en communication avec la première chambre de service (11), laquelle vanne de secours est aussi en communication avec un canal de secours (31) qui est en communication avec la seconde chambre de service (12) ou avec le réservoir, la vanne de secours (14) reliant la première chambre de service (11) au canal de secours (31) si la pompe (2) ne délivre pas de fluide hydraulique à l'actionneur (1).

5. Dispositif d'activation selon la revendication 4, dans lequel la vanne de secours (14) est une vanne qui peut être commandée par écoulement de fluide et qui, en présence d'un écoulement de fluide depuis la pompe (2) vers la première chambre de service (11) obture le canal de secours (31), et, sinon, assure une communication libre entre la première chambre de service (11) et le canal de secours (31).

6. Dispositif d'activation selon la revendication 5, dans lequel la vanne de secours (14) comprend un corps (21), un alésage (22) formé dans le corps, un piston (23) s'assemblant dans l'alésage et pouvant être déplacé dans ce dernier, lequel piston (23) divise l'alésage en deux espaces (24, 25), un passage (27) formé dans le piston et conçu comme un orifice d'écoulement reliant les deux espaces (24, 25), un canal d'alimentation (28) qui est formé dans le corps (21) et relie l'orifice (4) de la pompe à un des espaces (24) de l'alésage (22) et au moyen du passage (27) dans une position quelconque du piston (23), est en communication avec un premier canal d'évacuation (29) qui est formé dans le corps et relie l'autre espace (25) de l'alésage (22) à la première chambre de service (11) de l'actionneur à double action (1), un second canal d'évacuation (30) qui est formé dans le corps (21) et relie un des deux espaces de l'alésage et peut être obturé par le piston par rapport à l'alésage, et un ressort de rappel (32) placé entre le corps (21) et le piston (22). de telle manière que, en présence d'écoulement de fluide à travers le passage (27) à partir de la pompe (2) vers la première chambre de service (11), l'effort produit à travers l'orifice d'écoulement (27) déplace le piston (23) contre l'effort de rappel du ressort de rappel (32) et le piston obture ainsi le canal de secours (31), et, en l'absence d'écoulement de fluide à partir de la pompe (2) vers la première chambre de service (11), le ressort de rappel (32) rappelle le piston (23), et le piston (23) libère ainsi le canal de secours (31).
